# EUROPÄISCHE PATENTSCHRIFT

(11) **EP 1 519 867 B1**
(45) Veröffentlichungstag und Bekanntmachung des Hinweises auf die Patenterteilung: **05.12.2007**
(21) Anmeldenummer: 03762477.2
(22) Anmeldetag: 02.05.2003
(51) Int. Cl.: B61B 13/10, B61B 13/08

(54) **VERFAHREN ZUM BETRIEB EINES FAHRWEGES EINES SPURGEBUNDENEN FAHRZEUGES UND FAHRWEG**
METHOD FOR OPERATING A TRACK FOR A RAILBORNE VEHICLE, AND CORRESPONDING TRACK
PROCEDE POUR FAIRE FONCTIONNER LA VOIE D'UN VEHICULE GUIDE SUR RAILS, ET UNE TELLE VOIE

(30) Priorität: 04.07.2002 DE 10230240
(43) Veröffentlichungstag der Anmeldung: 06.04.2005
(73) Patentinhaber: Max Bögl Bauunternehmung GmbH & Co. KG, 92301 Neumarkt (DE)
(72) Erfinder: REICHEL, Dieter, 92318 Neumarkt (DE)
(74) Vertreter: Bergmeier, Werner
(86) Internationale Anmeldenummer: PCT/EP2003/004633
(87) Internationale Veröffentlichungsnummer: WO 2004/005102

(56) Entgegenhaltungen:
- GB-A- 1 104 746
- US-A- 2 013 703
- US-A- 5 146 853

## Beschreibung

Die vorliegende Erfindung betrifft ein Verfahren zum Betrieb eines Fahrweges eines spurgebundenen Fahrzeuges, insbesondere einer Magnetschwebebahn, in einem Tunnel, wobei das Fahrzeug von einer Tunnelröhre weitgehend umgeben wird. Darüber hinaus betrifft die Erfindung einen entsprechenden Fahrweg eines spurgebundenen Fahrzeuges in einem Tunnel, wobei das Fahrzeug von einer Tunnelröhre weitgehend umgeben ist und das Fahrzeug in der Tunnelröhre geführt ist, sowie ein entsprechendes spurgebundenes Fahrzeug.

Aus der DE 40 21 834 A1 ist eine Fahrwegkonfiguration für eine Magnetschwebebahn bekannt, welche im Wesentlichen in einem Tunnel verläuft. Das Fahrzeug der Magnetschwebebahn wird auf einer Fahrwegplatte geführt, welche in der Tunnelröhre befestigt ist. Die Tunnelröhre umgibt das Fahrzeug in einem relativ großen Abstand, so daß Laufstege seitlich neben dem Fahrzeug an der Tunnelröhrenwand angeordnet werden können, über welche die Fahrgäste bei Bedarf die Notausgänge erreichen können. Zum Druckausgleich werden Druckausgleichsöffnungen vorgeschlagen, welche die Röhre mit der Außenwelt verbinden. Die Druckausgleichsöffnungen bewirken ein Abströmen der durch das Fahrzeug verdrängten Luft aus der Röhre. Sie sind in den Ausführungsbeispielen insbesondere bei teilweise überdeckten Fahrwegen, beispielsweise an einem Berghang, dargestellt.

Aus der DE 41 15 935 C2 ist ebenfalls ein Fahrweg bekannt, welcher in einer Tunnelröhre verläuft. Auch hier ist zwischen dem Fahrzeug und der Tunnelwand ein großer Freiraum, welcher zur Verdrängung der Luft bei der Durchfahrt des Fahrzeuges erforderlich ist.

Nachteilig bei dem Stand der Technik ist es, daß in Relation zu den Fahrzeugen relativ große Tunnelröhren verwendet werden. Diese großen Tunnelröhren sind in der Herstellung sehr kostenaufwendig und zeitintensiv. Darüber hinaus ist bei einem Tunnel mit zwei Fahrschienen die Begegnung von schnell fahrenden Fahrzeugen problematisch, da die vor sich hergeschobenen Luftsäulen noch ungelöste Probleme verursachen. Die Fahrzeuge müssen daher relativ langsam aneinander vorbeifahren. Die alternativ hierzu erforderlichen riesigen Tunnelquerschnitte sind wirtschaftlich nur sehr schwer zu realisieren.

Aufgabe der vorliegenden Erfindung ist es somit ein wirtschaftliches Verfahren zum Betrieb eines Fahrweges eines spurgebundenen Fahrzeuges im Hochgeschwindigkeitsbereich, insbesondere bei Magnetschwebebahnen, und ein entsprechendes Bahnsystem zu schaffen.

Die Aufgabe wird gelöst durch ein Verfahren und ein Bahnsystem mit den Merkmalen der unabhängigen Patentansprüche.

Erfindungsgemäß wird bei einem Verfahren zum Betrieb eines Fahrweges eines spurgebundenen Fahrzeuges in einem Tunnel das Fahrzeug von der Tunnelröhre derart eng umschlossen, dass der Querschnitt der Tunnelröhre in Form und Größe im Wesentlichen dem Querschnitt des Fahrzeugs entspricht. Die von dem Fahrzeug bei der Durchfahrt verdrängte Luft wird durch Öffnungen des Fahrzeuges und/oder durch zumindest einen außerhalb oder innerhalb der Röhre liegenden und mit der Röhre verbundenen Luftkanal geleitet. Die Tunnelröhre wird möglichst eng ausgeführt, so daß die Herstellung der Tunnelröhre wirtschaftlich erfolgen kann. Die Kosten werden hierdurch reduziert und dadurch der Betrieb des Fahrzeuges kostengünstiger.

Die von dem Fahrzeuge verdrängte Luft wird entweder durch eine spezielle Konstruktion des Fahrzeuges, welche Durchtrittsöffnungen aufweist, abgeführt oder in Luftkanäle geleitet, welche mit der Röhre verbunden sind. Diese Luftkanäle können ebenfalls mit einem sehr kleinen Querschnitt ausgeführt sein. Insgesamt ist die Herstellung hierdurch kostengünstiger als bei der Herstellung einer einzigen Tunnelröhre mit einem großen Querschnitt. Darüber hinaus kann die Dimensionierung wesentlich gezielter erfolgen und somit insgesamt ein geringerer Querschnitt realisiert werden.

Vorteilhafterweise wird der Luftkanal als Flucht- und Rettungsweg benutzt. Über die Verbindungen der Tunnelröhre mit dem Luftkanal ist dieser von Personen begehbar und kann im Notfall von Fahrgästen erreicht werden. Rettungspersonal kann über den Luftkanal Zugang zu dem verunglückten Fahrzeug erlangen und die erforderlichen Rettungsarbeiten durchführen.

Zum erforderlichen Druckluftausgleich und für die zur Verfügungstellung entsprechender Notausgänge werden die Röhre und der Luftkanal mit einer Vielzahl von Öffnungen verbunden. Die Öffnungen können unterschiedlich groß sein und bei Bedarf geschlossen werden.

Wird die Röhre zumindest teilweise evakuiert, so ist das Druckluftvolumen entsprechend geringer, wodurch der Luftkanal auch klein dimensioniert werden oder sogar entfallen kann.

Besonders vorteilhaft ist es, wenn die verdrängte Luft passiv durch die Bewegung des Fahrzeuges in den Luftkanal geleitet wird. Der Staudruck, welcher bei der Durchfahrt des Fahrzeuges durch die Röhre erzeugt wird, schiebt dabei die verdrängte Luft durch die Öffnungen in den Luftkanal, in welchem sie abgeführt oder nach dem Fahrzeug in die Röhre zurückgeführt wird. Zusätzlich oder alternativ hierzu kann die verdrängte Luft aktiv, insbesondere durch eine Turbine durch das Fahrzeug oder in den Luftkanal geleitet werden. Die Turbine erzeugt eine Luftströmung, welche dem Aufbau eines Staudrucks entgegenwirkt. Hierdurch kann das Fahrzeug in besonders vorteilhafter Weise energiesparend betrieben werden, da es nicht die komplette Luftsäule, wie im passiven Betrieb, verdrängen muss.

Bei einem erfindungsgemäßen Bahnsystem eines spurgebundenen Fahrzeuges, insbesondere einer Magnetschwebebahn in einem Tunnel ist das Fahrzeug von einer Tunnelröhre weitgehend umgeben. In der Tunnelröhre sind Anbauteile zum Führen des Fahrzeuges angeordnet. Die Tunnelröhre umschließt das Fahrzeug eng. Die von dem Fahrzeug bei der Durchfahrt durch den Tunnel verdrängte Luft wird durch Öffnungen des Fahrzeuges und/oder durch außerhalb oder innerhalb der Röhre liegende und mit der Röhre verbundene Luftkanäle geleitet.

Das spurgebundene Fahrzeug, weist Durchtrittsöffnungen auf, durch welche die von dem Fahrzeug bei der Durchfahrt verdrängt Luft hindurch geleitet wird. Der Querschnitt der Tunnelröhre entspricht hierbei in Form und Größe im Wesentlichen dem Querschnitt des Fahrzeugs. Das erfindungsgemäße Fahrzeug ist kostengünstig betreibbar, da der Fahrwiderstand des Fahrzeuges reduziert ist,

Der erfindungsgemäße Bahnsystem ist kostengünstig herstellbar, da eine minimal erforderliche Tunnelröhre eingesetzt wird. Die Herstellung einer solchen Tunnelröhre mit geringem Querschnitt ist wesentlich kostengünstiger als die Herstellung einer großen Tunnelröhre. Eine enge Röhre, deren Querschnitt kaum größer als der Querschnitt des Fahrzeuges ist, bietet neben den wesentlich geringeren Baukosten auch Vorteile für den Betrieb des Fahrzeuges. Die Führung des Fahrzeuges kann beispielsweise direkt in die Tunnelröhre integriert werden, wodurch spezielle Träger zusätzlich zur Tunnelröhre nicht oder kaum erforderlich sind. Die mit der Röhre verbundenen Luftkanäle können ebenfalls mit einem sehr geringen Querschnitt, welcher deutlich kleiner als der Querschnitt der eigentlichen Tunnelröhre ist, hergestellt werden.

In erfinderischer und vorteilhafter Weise sind an der Wand der Tunnelröhre Anbauteile zum Führen des Fahrzeuges angeordnet. Dadurch, daß der Spalt zwischen dem Fahrzeug und der Tunnelröhre eng ausgebildet ist, können die Anbauteile direkt in der Tunnelwand integriert sein. Dies ermöglicht eine besonders kostengünstige Herstellung des Komplettsystems Röhre und Führung des Fahrzeuges.

Sind die Anbauteile Statorebenen, Seitenführungsschienen, Gleitleisten und/oder Leitwerke, so ist die elektrische und mechanische Führung des Fahrzeuges durch die in die Wand integrierten Anbauteile auf sehr einfache Weise gesichert. Die Führung des Fahrzeuges kann dabei über an der Wand der Tunnelröhre plan anliegende und/oder winkelig und/oder flächig abstehende Anbauteile erfolgen.

Vorteilhafterweise haben die einzelnen Anbauteile mehrere Führungs- und Antriebsfunktionen in sich vereint. So können beispielsweise schräg angeordnete Statorebenen auch Setenführungsaufgaben erfüllen. Separate Seitenführungsschienen können dadurch ganz oder teilweise entfallen.

Weist der Luftkanal Einrichtungen zur Nutzung als Flucht- und Rettungsweg auf, so ist neben der Funktionalität der Luftaufnahme bei einer Vorbeifahrt des Fahrzeuges außerdem ein sicherheitstechnischer Aspekt zu lösen. Verunglückte Fahrzeuge und deren Fahrgäste können über den Luftkanal flüchten oder gerettet werden. Die entsprechenden Einrichtungen können beispielsweise ebene Fuß- oder Fahrwege, Feuerlöscher, Alarmanlagen, Telefonapparate, Leitern, Treppen, Aufzüge oder Treppenhäuser an die Oberfläche oder Beleuchtungen sein, welche für die Flucht oder Rettung hilfreich sind.

Ist der Luftkanal mit der Erdoberfläche verbunden, so kann ein Druckausgleich direkt mit der Umgebungsluft der Außenwelt erfolgen.

Sind die Röhre und der Luftkanal mit einer Vielzahl von Öffnungen verbunden, so ist der Wechsel von der Tunnelröhre in den Luftkanal für Passagiere und Rettungspersonal an sehr vielen Stellen möglich. Die Flucht oder Rettung kann hierdurch sehr schnell und zuverlässig erfolgen. Darüber hinaus ist sichergestellt, daß die von dem Fahrzeug verdrängte Luft sehr schnell aus der Tunnelröhre in den Luftkanal entweichen kann und somit der Fahrwiderstand des Fahrzeuges verringert wird. Hierfür ist es auch von besonderem Vorteil, wenn die Öffnungen eine Größe aufweisen, welche sicherstellen, daß die von dem Fahrzeug verdrängte Luft vollständig in den Luftkanal entweichen kann. Gleiches gilt selbstverständlich für die Größe des Luftkanals, welcher ebenso dimensioniert sein muß, daß die verdrängte Luft von dem Luftkanal zumindest größtenteils aufgenommen werden kann.

Besonders vorteilhaft ist es, wenn die Ränder der Öffnungen strömungsgünstig ausgebildet sind. Die verdrängte Luft kann dann ohne großen Strömungswiderstand in den Luftkanal und zurück in die Tunnelröhre strömen.

Vorteilhafterweise sind die Öffnungen zwischen Röhre und Luftkanal verschließbar. So kann beispielsweise im Falle eines Brandes sichergestellt werden, daß der Fluchtweg erhalten bleibt. Außerdem kann bei sich begegnenden Fahrzeugen in der Tunnelröhre die Luftführung gezielt beeinflußt werden.

Sind der Röhre Einrichtungen zugeordnet zum zumindest teilweisen Evakuieren der Röhre, so ist die zu verdrängende Luft sehr gering. Die Luftkanäle können dementsprechend klein ausgeführt werden, was wiederum die Herstellung der Luftkanäle sehr kostengünstig ermöglicht.

Sind die Querschnittsform der Röhre und des Fahrzeuges im wesentlichen gleich, so wird der Querschnitt der Röhre weitgehend ausgefüllt von dem Fahrzeug. Es strömt nur eine geringe Luftmenge an dem Fahrzeug innerhalb der Röhre vorbei. Die verdrängte Luft von dem Fahrzeug wird hierbei nahezu komplett in den oder die Luftkanäle abgeführt. Zur weiteren Reduzierung des Staudruckes, welcher auf das Fahrzeug bei der Durchfahrt durch den Tunnel entsteht, ist es vorteilhaft der Röhre und/oder dem Fahrzeug eine Turbine zuzuordnen. Mittels der Turbine wird die zu verdrängende Luft vorbeschleunigt, so daß sie nicht durch das Fahrzeug allein in Bewegung gesetzt werden muß. Das Abströmen in den Luftkanal oder durch das Fahrzeug hindurch kann hierdurch beschleunigt werden. Der Fahrwiderstand des Fahrzeuges wird dadurch wesentlich reduziert.

Besonders vorteilhaft ist es, wenn die Turbine im Bereich einer Aussparung des Fahrzeuges gegenüber dem Tunnel und/oder in dem. Luftkanal angeordnet ist. Während die Tunnelröhre im wesentlichen das Fahrzeug eng umschließt, kann im Bereich einer in der Röhre installierten Turbine das Fahrzeug ausgespart sein, so daß es bei der Überfahrt über die Turbine nicht mit dieser kollidiert. Alternativ ist es auch möglich, daß die Turbine in dem Fahrzeug fest installiert ist und die Luft entsprechend beschleunigt. Es kann hierbei die Turbine als Rückstoßantrieb, für das Fahrzeug dienen und somit den eigentlichen Antrieb des Fahrzeuges unterstützen.

In einer weiteren Ausführungsmöglichkeit ist die Turbine in dem Luftkanal angeordnet und beschleunigt hierin bereits die Luft und leitet sie ggf. mit einem entsprechenden Luftführungssystem aus der Tunnelröhre in den Luftkanal sobald sich das Fahrzeug der entsprechenden Stelle in dem Tunnel nähert. Meist ist es ausreichend, wenn die Turbine nur unmittelbar vor dem Passieren des Fahrzeuges in Betrieb gesetzt wird. Ein Dauerbetrieb ist meist nicht erforderlich.

Ist die Turbine an der Tunneleinfahrt und/oder an Begegnungsstellen in dem Tunnel angeordnet, so können insbesondere die Bereiche, in welchen die Druckluft besonders massiv auf das Fahrzeug einwirkt, entschärft werden. Der Druckluftstoß an der Tunneleinfahrt sowie bei der Begegnung mit einem entgegenkommenden Fahrzeug in dem Tunnel wird durch eine entsprechend angesteuerte Turbine deutlich reduziert, da die Druckluft sehr schnell von dieser Turbine insbesondere in den Luftkanal hinein befördert wird.

Weitere Vorteile der Erfindung sind in den nachfolgenden Ausführungsbeispielen beschrieben. Es zeigen:
- **Figur 1 - 3**: verschiedene Querschnitte von Tunnelröhren und Fahrzeugen,
- **Figur 4 - 6**: verschiedene Tunnelquerschnitte mit Fahrzeugen mit aktiver Luftverdrängung,
- **Figur 7**: ein Fahrzeug in einer Tunnelröhre mit Luftkanälen und
- **Figur 8**: zwei sich begegnende Fahrzeuge in Tunnelröhren mit einem gemeinsamen Luftkanal.

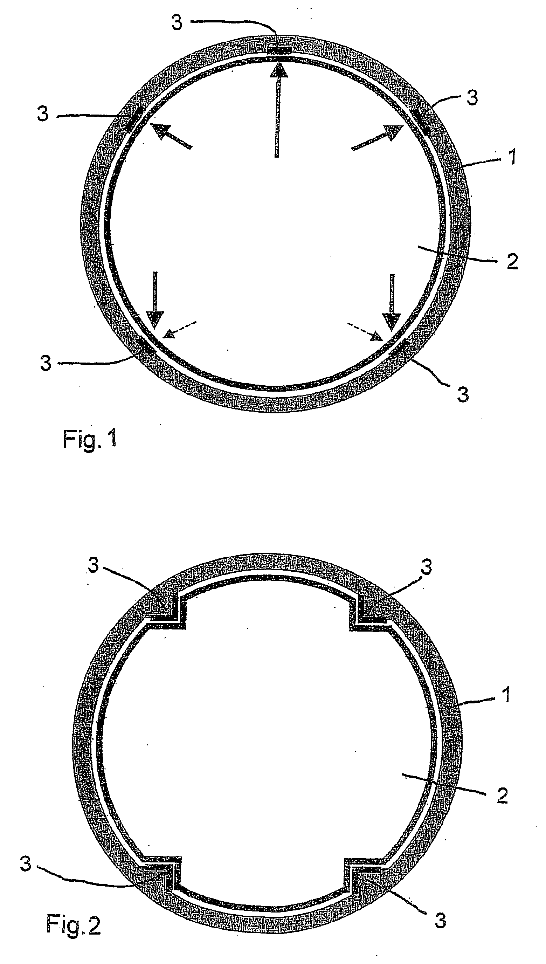

Figur 1 zeigt im Querschnitt eine Tunnelröhre 1, welche ein Fahrzeug 2 eng umschließt. Das Fahrzeug 2 ist ebenso wie die Tunnelröhre 1 im wesentlichen kreisrund ausgeführt. Zur Führung und zum Vortrieb des Fahrzeugs 2 sind in der Tunnelröhre 1 Anbauteile 3 angeordnet. Über diese Anbauteile 3 ist es dem Fahrzeug mit entsprechenden, nicht dargestellten korrespondierenden Antriebsmitteln, beispielsweise einem Magnetantrieb möglich, sich relativ zu der Tunnelröhre 1 in Längsrichtung zu bewegen. Durch die Verteilung der Anbauteile 3 am Umfang der Tunnelröhre 1 wird eine gewisse Stabilität auf das Fahrzeug 2 ausgeübt, so daß ein ruhiger Lauf des Fahrzeuges 2 ermöglicht wird. Die Anbauteile 3 sind in die Tunnelwand integriert und übernehmen die kombinierten Funktionen der Seitenführungsschienen, der Gleitleisten und der Statorebenen herkömmlicher Systeme.

Die von dem Fahrzeug 2 während der Durchfahrt durch die Tunnelröhre 1 erzeugte Stauluft wird vor dem Fahrzeug 2 hergeschoben. Wie später ausgeführt wird, ist die Abfuhr dieser Luft durch verschiedene Systeme erfindungsgemäß ermöglicht.

In Figur 2 ist eine weitere Ausführung einer Tunnelröhre 1 und eines Fahrzeuges 2 dargestellt. Die Anbauteile 3 der Tunnelröhre 1 ragen in den Tunnelquerschnitt hinein und stabilisieren somit das Fahrzeug 2 zusätzlich. Die Anbauteile 3 und die entsprechenden Antriebselemente des Fahrzeuges 2 werden durch die Formgebung der Anbauteile 3 und deren winkeliger Anordnung an der Tunnelwand zusätzlich geführt und bewirken einen besonders ruhigen Lauf des Fahrzeuges 2. Die oberen Anbauteile 3 übernehmen die Funktionen der Statorebenen und Seitenführungsschienen; während den unteren Anbauteilen 3 die Funktionen der Gleitleisten und der Seitenführungsschienen zugewiesen sind.

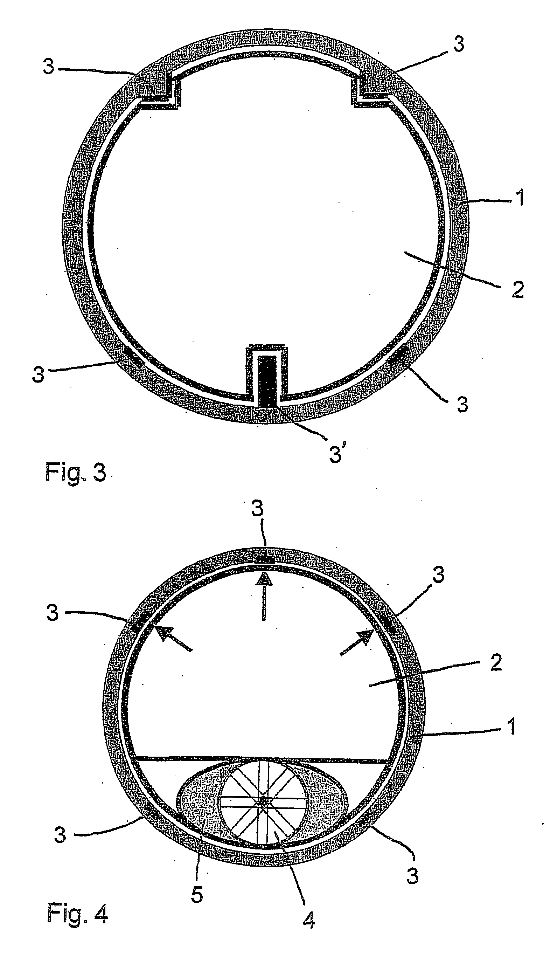

Gemäß dem Ausführungsbeispiel der Figur 3 weist die Tunnelröhre 1 Anbauteile 3 auf, welche einerseits winklig, gemäß der Ausführung nach Figur 2 in den Querschnitt der Tunnelröhre 1 hineinragen. Darüber hinaus ist ein weiteres Anbauteil 3' in der Art eines Leitwerkes vorgesehen, welches ebenfalls in das Innere der Tunnelröhre 1 hineinragt. An den Anbauteilen 3 und 3' stützt sich das Fahrzeug 2 mit seinen Statorebenen und Seitenführschienen ab und ermöglicht hierdurch einen stabilen Lauf des Fahrzeuges. Die Anbauteile 3 und 3' übernehmen wiederum kombinierte Aufgaben des Antriebs und der Führung des Fahrzeuges 2.

Figur 4 zeigt eine Skizze einer Tunnelröhre 1 und eines Fahrzeuges 2 nach dem Prinzip der Figur 1. Die Anbauteile 3 sind am Umfang der Tunnelröhre 1 angeordnet. In dem Fahrzeug 2 ist eine Turbine 4 vorgesehen, welche über einen Lufteinlaß 5 die an sich zu verdrängende Luft ansaugt, durch das Fahrzeug 2 hindurchleitet und am Ende des Fahrzeuges 2 wieder ausstößt. Der Staudruck wird somit wesentlich geringer als bei einem Fahrzeug 2, welches ohne einem derartigen Hilfsmittel die enge Röhre 1 befährt. Die Turbine 4 bewirkt zudem, daß durch den Rückstoß beim Ausstoßen der Luft am Fahrzeugende das Fahrzeug 2 zusätzlich beschleunigt wird. Das Fahrzeug 2 kann somit energiesparend betrieben werden.

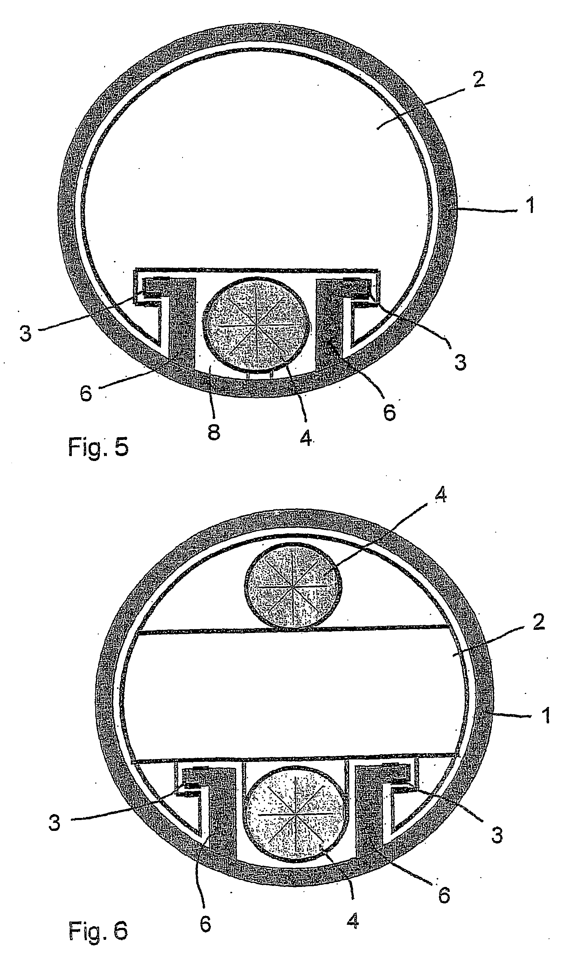

In Figur 5 sind in der Tunnelröhre 1 Träger 6 angeordnet. An den Trägern 6 befinden sich die Anbauteile 3, welche für den Antrieb und die Seitenführung des Fahrzeuges 2 zusammen mit den entsprechenden Antriebsmitteln des Fahrzeuges 2 sorgen. Zwischen den Trägern 6 ist ein Hohlraum, welcher nicht von dem Fahrzeug 2 ausgefüllt wird. Dieser Hohlraum bildet den Luftkanal 8, durch den die verdrängte Luft des Fahrzeuges 2 an dem Fahrzeug 2 vorbei geleitet wird. In diesem Hohlraum befindet sich in bestimmten Abständen oder an bestimmten kritischen Stellen, wie beispielsweise der Tunneleinfahrt oder an Begegnungsstellen jeweils eine Turbine 4. Die Turbine 4 ist fest an diesem Ort befestigt und sorgt für den Druckausgleich beim Annähern an die und bei der Überfahrt des Fahrzeuges 2 über die Turbine 4. Bei niedrigeren Fahrgeschwindigkeiten oder entsprechenden Dimensionierungen der Röhre 1 kann auf die Turbine 4 auch verzichtet werden.

Die Anbauteile 3 sowie das Antriebssystem des Fahrzeuges 2 entsprechen im wesentlichen dem Stand der Technik für den Antrieb von Magnetschwebefahrzeugen. Für eine derartige Anwendung der Erfindung wäre lediglich eine entsprechende Gestaltung des Fahrzeuges 2 erforderlich.

In Figur 6 ist eine Tunnelröhre 1 mit Trägern 6 und Anbauteilen 3 entsprechend der Figur 5 dargestellt. Im Gegensatz zur Ausführung nach Figur 5 sind bei der Ausführung nach Figur 6 zwei Turbinen 4 an dem Fahrzeug 2 angeordnet. Die Turbinen 4 sind insbesondere bei der Fahrt in den Tunnel 1 in Betrieb und fördern aktiv die Stauluft durch das Fahrzeug 2 zu dessen Ende hin. Die Turbinen 4 sind an der Oberseite und der Unterseite des Fahrzeuges 2 angeordnet, so daß der mittlere Bereich für Fahrgäste oder Transportgüter zur Verfügung steht.

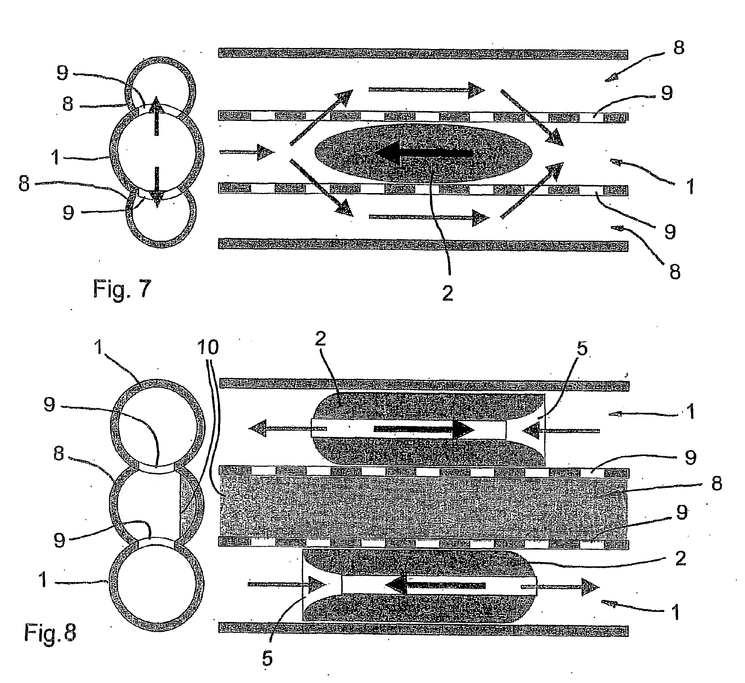

Figur 7 zeigt eine skizzierte Darstellung eines Röhrensystems im Querschnitt und in der Draufsicht. Die Tunnelröhre 1, durch welche das Fahrzeug 2 fährt, ist mittig zwischen zwei Luftkanälen 8 angeordnet. Es kann auch ein einziger Luftkanal 8 ausreichend sein. Die Tunnelröhre 1 ist mit den Luftkanälen 8 über Öffnungen 9 verbunden. Bei einer Fahrt des Fahrzeuges 2 durch die Röhre 1 wird die von dem Fahrzeug verdrängte Luft durch die Öffnungen 9 in die Luftkanäle 8 gedrückt. Hinter dem Fahrzeug 2 strömen die verdrängten Luftmassen wieder zurück in die Tunnelröhre 1 und sorgen dort für einen Druckausgleich.

Ein derartiges System ist besonders einfach realisierbar, da die entsprechenden Röhren 1 und 8 sehr einfach in einen Berg getrieben werden können. Die Röhren 8 dienen darüber hinaus als Flucht- und Rettungsweg, über welche ein havariertes Fahrzeug 2 versorgt werden kann. Die Öffnungen 9 und die Luftkanäle 8 sind so dimensioniert, daß die von dem Fahrzeug 2 verdrängte Luft weitgehend aufgenommen wird. Der Widerstand gegen das Fahrzeug 2 bei einer Durchfahrt durch die enge Tunnelröhre 1 wird hierdurch minimiert. Die Ränder der Öffnungen sind vorteilhafterweise strömungsgünstig ausgebildet um die verdrängte Luft ohne großen Strömungswiderstand in den Luftkanal und zurück in die Tunnelröhre strömen zu lassen.

In Figur 8 ist eine weitere Ausführung der Erfindung in Draufsicht und im Querschnitt gezeigt. Es handelt sich hierbei um zwei Tunnelröhren 1, welche für zwei Fahrzeuge 2 ausgelegt sind. Die Fahrzeuge 2 können einander begegnen, weshalb der Luftkanal 8 so ausgelegt ist, daß die Druckluft von den beiden Fahrzeugen 2 aufgenommen werden kann, ohne daß sie sich gegenseitig behindern. Darüber hinaus weist jedes der Fahrzeuge 2 einen Lufteinlaß 5 auf, durch welchen ein Teil der verdrängten Luft durch das Fahrzeug 2 strömen kann. Die verdrängte Luft geht somit nur teilweise durch die Öffnungen 9 in den Luftkanal 8 hinein, um dort um das Fahrzeug 2 herumströmen zu können. Nach dem Passieren des Fahrzeuges 2 fließt die verdrängte Luft wieder durch die Öffnungen 9 aus dem Luftkanal 8 in die Tunnelröhre 1 zurück.

Der Luftkanal 8 dient darüber hinaus als Flucht- und Rettungsweg für beide Tunnelröhren 1. Er weist deshalb einen Geh- oder Fahrweg 10 auf, welcher am Boden des Luftkanals 8 angeordnet ist.

Die vorliegende Erfindung ist nicht auf die dargestellten Ausführungsbeispiele beschränkt. Es sind insbesondere Kombinationen der einzelnen Ausführungen sowie nicht dargestellte Ausführungen, welche unter den Schutzumfang der Patentansprüche fallen, möglich. Der Luftkanal muß nicht immer parallel zur Tunnelröhre verlaufen. Er kann auch zur Erdoberfläche hin gerichtet sein, um dort einen Druckausgleich zu ermöglichen.

## Patentansprüche

1. Verfahren zum Betrieb eines Fahrweges eines spurgebundenen Fahrzeuges, insbesondere einer Magnetschwebebahn, in einem Tunnel, wobei das Fahrzeug (2) von einer Tunnelröhre. (1) weitgehend umgeben wird, **dadurch gekennzeichnet, dass** das Fahrzeug (2) von der Tunnelröhre (1), derart eng umschlossen wird, dass der Querschnitt der Tunnelröhre (1) in Form und Größe im Wesentlichen dem Querschnitt des Fahrzeugs entspricht, und die von dem Fahrzeug (2) bei der Durchfahrt verdrängte Luft durch Öffnungen des Fahrzeuges (2) und/oder durch zumindest einen außerhalb oder innerhalb der Röhre (1) liegenden und mit der Röhre (1) verbundenen Luftkanal (8) geleitet wird.

2. Verfahren nach Anspruch 1, **dadurch gekennzeichnet, dass** der Luftkanal (8) als Flucht- und Rettungsweg benutzt wird.

3. Verfahren nach einem der vorherigen Ansprüche, **dadurch gekennzeichnet, dass** die Röhre (1) und der Luftkanal (8) mit einer Vielzahl von Öffnungen (9) verbunden werden.

4. Verfahren nach einem der vorherigen Ansprüche, **dadurch gekennzeichnet, dass** die Röhre (1) zumindest teilweise evakuiert wird.

5. Verfahren nach einem der vorherigen Ansprüche, **dadurch gekennzeichnet, dass** die verdrängte Luft passiv durch die Bewegung des Fahrzeuges (2) oder aktiv, insbesondere durch eine Turbine (4) durch das Fahrzeug (2) und/oder in den Luftkanal (8) geleitet wird.

6. Bahnsystem mit einem Fahrweg eines spurgebundenen Fahrzeuges, insbesondere einer Magnetschwebebahn, in einem Tunnel, mit einer Tunnelröhre (1), von welcher das Fahrzeug (2) weitgehend umgeben ist und in welcher das Fahrzeug (2) geführt ist, **dadurch gekennzeichnet, dass** der Fahrweg zumindest einen außerhalb oder innerhalb der Röhre (1) liegenden und mit der Röhre (1) verbundenen Luftkanal (8) aufweist, durch welchen die von dem Fahrzeug (2) bei der Durchfahrt verdrängte Luft geleitet wird, wobei der Querschnitt der Tunnelröhre (1) in Form und Größe im Wesentlichen dem Querschnitt des Fahrzeugs entspricht.

7. Bahnsystem nach dem vorherigen Anspruch, **dadurch gekennzeichnet, dass** an der Wand der Tunnelröhre (1) Anbauteile (3,3') zum Führen des Fahrzeuges (2) angeordnet sind.

8. Bahnsystem nach dem vorherigen Anspruch, **dadurch gekennzeichnet, dass** die Anbauteile (3,3') Statorebenen, Seitenführungsschienen, Gleitleisten und/oder Leitwerke sind.

9. Bahnsystem nach Anspruch 7, **dadurch gekennzeichnet, dass** die einzelnen Anbauteile (3,3') mehrere Führungs- und Antriebsfunktionen in sich vereint haben.

10. Bahnsystem nach einem der Ansprüche 6 bis 9, **dadurch gekennzeichnet, dass** der Luftkanal, (8) Einrichtungen zur Nutzung als Flucht- und Rettungsweg aufweist.

11. Bahnsystem nach einem der Ansprüche 6 bis 10, **dadurch gekennzeichnet, dass** der Luftkanal (8) mit der Erdoberfläche verbunden ist.

12. Bahnsystem nach einem der Ansprüche 6 bis 11, **dadurch gekennzeichnet, dass** die Röhre (1) und der Luftkanal (8) mit einer Vielzahl von Öffnungen (9) verbunden sind.

13. Bahnsystem nach dem vorherigen Anspruch, **dadurch gekennzeichnet, dass** die Ränder der Öffnungen (9) strömungsgünstig ausgebildet sind.

14. Bahnsystem nach Anspruch 12 oder 13, **dadurch gekennzeichnet, dass** die Öffnungen (9) verschließbar sind.

15. Bahnsystem nach einem der Ansprüche 6 bis 14, **dadurch gekennzeichnet, dass** der Röhre (1) Einrichtungen zugeordnet sind zum zumindest teilweisen evakuieren der Röhre (1).

16. Bahnsystem nach einem der Ansprüche 6 bis 15, **dadurch gekennzeichnet, dass** der Röhre (1) eine Turbine (4) zugeordnet ist.

17. Bahnsystem nach dem vorherigen Anspruch, **dadurch gekennzeichnet, dass** die Turbine (4) im Bereich einer Aussparung des Fahrzeuges (2) gegenüber dem Tunnel (1) und/oder in dem Luftkanal (8) angeordnet ist.

18. Bahnsystem nach Anspruch 16, **dadurch gekennzeichnet, dass** die Turbine (4) an der Tunneleinfahrt und/oder an Begegnungsstellen in dem Tunnel (1) angeordnet sind.

19. Bahnsystem nach einem der Ansprüche 6 bis 18, **dadurch gekennzeichnet, dass** das Fahrzeug Durchtrittsöffnungen aufweist, durch weiche die bei der Durchfahrt

20. Bahnsystem nach dem vorhergehenden Anspruch, **dadurch gekennzeichnet, dass** dem Fahrzeug (2) eine Turbine (4) zugeordnet ist.

21. Bahnsystem nach dem vorhergehenden Anspruch, **dadurch gekennzeichhet, dass** an der Oberseite und der Unterseite des Fahrzeuges jeweils eine Turbine angeordnet ist.

## Claims

1. A method for operation of a track-bound vehicle, especially a magnetic levitation train, in a tunnel, whereby the vehicle (2) is largely surrounded by a tunnel tube (1), **characterized in that** the vehicle is surrounded by the tunnel tube such closely that the cross-section of the tunnel tube is substantially equivalent to the cross-section of the vehicle concerning form and size, and the air displaced by the vehicle (2) as it travels through the tunnel is directed through openings of the vehicle (2) and/or through at least one air channel (8) that is located outside or inside the tube (1) and is connected to the tube (1).

2. Method according to claim 1, **characterized in that** the air channel (8) functions as an emergency path for escape or rescue.

3. Method according to one of the previous claims, **characterized in that** the tube (1) and the air channel (8) are connected by a plurality of openings (9).

4. Method according to one of the previous claims, **characterized in that** the tube (1) is evacuated at least partially.

5. Method according to one of the previous claims, **characterized in that** the displaced air is directed passively by the movement of the vehicle (2) or actively especially by a turbine (4) through the vehicle (2) and/or into the air channel (8).

6. Railway system with a track system for a rail-bound vehicle, especially a magnetic levitation train, in a tunnel, with a tunnel tube (1) by which the vehicle (2) is largely surrounded and in which the vehicle (2) is guided, **characterized in that** the track system comprises at least one air channel (8) that is located outside or inside the tube (1) and is connected to the tube (1) and through which air channel (8) the air is directed that is displaced by the vehicle (2) when driving through, the cross-section of the tunnel tube (1) being substantially equivalent to the cross-section of the vehicle concerning form and size.

7. Railway system according to the previous claim, **characterized in that** built-on parts (3, 3') are attached to the wall of the tunnel tube (1) to guide the vehicle (2).

8. Railway system according to the previous claim, **characterized in that** the built-on parts (3, 3') are stator surfaces, lateral guide rails, gliding laths, and/or routing circuits.

9. Railway system according to claim 7, **characterized in that** the single built-on parts (3, 3') combine several guidance and drive functions.

10. Railway system according to one of the claims 6 to 9, **characterized in that** the air channel (8) has installations to be used as an emergency path for escape and rescue.

11. Railway system according to one of the claims 6 to 10, **characterized in that** the air channel (8) is connected to the ground surface.

12. Railway system according to one of the claims 6 to 11, **characterized in that** the tube (1) and the air channel (8) are connected by a plurality of openings (9).

13. Railway system according to the previous claim, **characterized in that** the edges of the openings (9) are designed so as to favour flow.

14. Railway system according to claim 12 or 13, **characterized in that** the openings (9) are closeable.

15. Railway system according to one of the claims 6 to 14, **characterized in that** devices for the at least partial evacuation of the tube (1) are assigned to the tube (1).

16. Railway system according to one of the claims 6 to 15, **characterized in that** a turbine (4) is assigned to the tube (1).

17. Railway system according to the previous claim, **characterized in that** the turbine (4) is placed within an area of recess of the vehicle (2) relative to the tunnel (1) and/or the air channel (8).

18. Railway system according to claim 16, **characterized in that** a turbine (4) is placed at the entrance of the tunnel and/or at points of encounter in the tunnel (1).

19. Railway system according to one of the claims 6 to 18, **characterized in that** the vehicle has passage openings through which the air is directed that is displaced during the travel through.

20. Railway system according to the previous claim, **characterized in that** a turbine (4) is assigned to the vehicle (2).

21. Railway system according to the previous claim, **characterized in that** a turbine (4) is placed on the top and on the bottom side of the vehicle respectively.

## Revendications

1. Procédé pour l'exploitation d'une voie de circulation d'un véhicule guidé, particulièrement un train à suspension magnétique, dans un tunnel, sachant que le véhicule (2) est quasiment entouré par une galerie (1) de tunnel, **caractérisé en ce que** le véhicule (2) est entouré par la galerie (1) de tunnel de manière tellement serrée que la section de la galerie (1) de tunnel corresponde par sa forme et sa taille essentiellement à la section du véhicule (2) et que l'air déplacé par le véhicule (2) lors de son passage soit acheminé à travers des ouvertures du véhicule (2) et/ou à travers au moins une canalisation d'air (8) disposée hors ou au sein de la galerie (1) de tunnel et reliée à ladite galerie (1) de tunnel.

2. Procédé selon la revendication 1, **caractérisé en ce que** la canalisation d'air (8) est utilisée comme issue de secours et de sauvetage.

3. Procédé selon l'une quelconque des revendications précédentes, **caractérisé en ce que** la galerie (1) de tunnel et la canalisation d'air (8) sont reliées par un grand nombre d'ouvertures (9).

4. Procédé selon l'une quelconque des revendications précédentes, **caractérisé en ce que** la galerie (1) de tunnel est évacuée au moins partiellement.

5. Procédé selon l'une quelconque des revendications précédentes, **caractérisé en ce que** l'air déplacé passivement par le mouvement du véhicule (2) ou activement, particulièrement par une turbine (4), est acheminé à travers le véhicule (2) et/ou dans la canalisation d'air (8).

6. Système ferroviaire avec une voie de circulation d'un véhicule guidé, particulièrement un train à suspension magnétique, dans un tunnel, avec une galerie (1) de tunnel, par laquelle le véhicule (2) est quasiment entouré et dans laquelle le véhicule (2) est guidé, **caractérisé en ce que** la voie de circulation comporte au moins une canalisation d'air (8) disposée hors ou au sein de la galerie (1) de tunnel et reliée à ladite galerie (1) de tunnel, à travers laquelle est acheminé l'air déplacé par le véhicule (2) lors de son passage, sachant que la section de la galerie (1) de tunnel correspond par sa forme et sa taille essentiellement à la section du véhicule (2).

7. Système ferroviaire selon la revendication précédente, **caractérisé en ce que** des éléments rapportés (3, 3') sont disposés à la paroi de la galerie (1) de tunnel pour guider le véhicule (2).

8. Système ferroviaire selon la revendication précédente, **caractérisé en ce que** lesdits éléments rapportés (3, 3') sont des plans à stators, des rails de guidage latéral, des glissières et/ou des estacades de guidage.

9. Système ferroviaire selon la revendication 7, **caractérisé en ce que** les différents éléments rapportés (3, 3') allient plusieurs fonctions de guidage et d'entraînement.

10. Système ferroviaire selon l'une quelconque des revendications 6 à 9, **caractérisé en ce que** la canalisation d'air (8) comporte des dispositifs pour son utilisation comme issue de secours et de sauvetage.

11. Système ferroviaire selon l'une quelconque des revendications 6 à 10, **caractérisé en ce que** la canalisation d'air (8) est reliée à la surface de la terre.

12. Système ferroviaire selon l'une quelconque des revendications 6 à 11, **caractérisé en ce que** la galerie (1) de tunnel et la canalisation d'air (8) sont reliées par un grand nombre d'ouvertures (9).

13. Système ferroviaire selon la revendication précédente, **caractérisé en ce que** les bords des ouvertures (9) se présentent sous une forme favorable à l'écoulement.

14. Système ferroviaire selon l'une quelconque des revendications 12 ou 13, **caractérisé en ce que** les ouvertures (9) peuvent être fermées.

15. Système ferroviaire selon l'une quelconque des revendications 6 à 14, **caractérisé en ce que** des dispositifs sont assignées à la galerie (1) de tunnel pour l'évacuation au moins partielle de la galerie (1) de tunnel.

16. Système ferroviaire selon l'une quelconque des revendications 6 à 15, **caractérisé en ce qu'**une turbine (4) est assignée à la galerie (1) de tunnel.

17. Système ferroviaire selon la revendication précédente, **caractérisé en ce que** la turbine (4) est disposée dans la zone d'un évidement du véhicule (2) en face du tunnel (1) et/ou dans la canalisation d'air (8).

18. Système ferroviaire selon la revendication 16, **caractérisé en ce que** la turbine (4) est disposée à l'entrée du tunnel et/ou à des points de rassemblement dans le tunnel (1).

19. Système ferroviaire selon l'une quelconque des revendications 6 à 18, **caractérisé en ce que** le véhicule comporte des ouvertures de passage, à travers lesquelles est acheminé l'air déplacé lors du passage du véhicule.

20. Système ferroviaire selon la revendication précédente, **caractérisé en ce qu'**une turbine (4) est assignée au véhicule (2).

21. Système ferroviaire selon la revendication précédente, **caractérisé en ce qu'**une turbine (4) est installée respectivement sur le côté supérieur et sur le côté inférieur du véhicule.
